# EUROPEAN PATENT APPLICATION

(11) **EP 4 818 501 A1**
(43) Date of publication of application: **07.10.2026**
(21) Application number: 26167814.8
(22) Date of filing: 25.03.2026
(51) Int. Cl.: F02C 9/18, F02K 3/075

(54) **INTER-FLOWPATH STRUCTURE WITH AIR CIRCUIT(S) FOR AIRCRAFT PROPULSION SYSTEM**

(30) Priority: 25.03.2025 US 202519089915
(71) Applicant: RTX Corporation, Farmington, CT 06032 (US)
(72) Inventor: KUPRATIS, Daniel B., Wallingford (US); SIDELKOVSKIY, Dmitriy, Ellington (US)
(74) Representative: Dehns

(57) **Abstract**

An assembly is provided for an aircraft propulsion system (20). This assembly includes a fan rotor (44), an engine core (38), an engine flowpath, a bypass flowpath (42), an inter-flowpath structure (108) and an air circuit (130). The inter-flowpath structure (108) includes a structure leading edge, a structure inner side and a structure outer side. The inter-flowpath structure (108) projects axially to the structure leading edge next to and downstream of the fan rotor (44). The structure inner side borders the core flowpath (40). The structure outer side borders the bypass flowpath (42). The air circuit (130) includes a circuit inlet (132) fluidly coupled to the core flowpath (40) and a circuit outlet (134) fluidly coupled to the bypass flowpath (42). The air circuit (130) extends within the inter-flowpath structure (108) from the circuit inlet (132) to the circuit outlet (134). The circuit inlet (132) is disposed along the structure inner side and is upstream of the compressor section (33). The circuit outlet (134) is disposed along the structure outer side.

## Description

### BACKGROUND OF THE DISCLOSURE

### 1. Technical Field

This disclosure relates generally to an aircraft propulsion system and, more particularly, to an air circuit for the aircraft propulsion system.

### 2. Background Information

A propulsion system for an aircraft may include one or more air circuits, including those which bleed core air from a core flowpath and exhaust that bled core air into a bypass flowpath. Various types and configurations of air circuits are known in the art. While these known air circuits have various benefits, there is still room in the art for improvement.

### SUMMARY OF THE DISCLOSURE

According to an aspect of the present disclosure, an assembly is provided for an aircraft propulsion system. This assembly includes a fan rotor, an engine core, an engine flowpath, a bypass flowpath, an inter-flowpath structure and an air circuit. The engine core is configured to drive rotation of the fan rotor about an axis. The engine core includes a compressor section, a combustor section and a turbine section. The core flowpath includes a core inlet and a core exhaust. The core flowpath extends through the compressor section, the combustor section and the turbine section from the core inlet to the core exhaust. The bypass flowpath includes a bypass inlet and bypasses the engine core. The inter-flowpath structure includes a structure leading edge, a structure inner side and a structure outer side. The inter-flowpath structure projects axially to the structure leading edge next to and downstream of the fan rotor. The inter-flowpath structure is disposed radially between and partially forms the core inlet and the bypass inlet at the structure leading edge. The structure inner side borders the core flowpath. The structure outer side borders the bypass flowpath. The air circuit includes a circuit inlet fluidly coupled to the core flowpath and a circuit outlet fluidly coupled to the bypass flowpath. The air circuit extends within the inter-flowpath structure from the circuit inlet to the circuit outlet. The circuit inlet is disposed along the structure inner side and is upstream of the compressor section. The circuit outlet is disposed along the structure outer side.

According to another aspect of the present disclosure, another assembly is provided for an aircraft propulsion system. This assembly includes a fan rotor, a core flowpath, a bypass flowpath, an inter-flowpath structure, a first air circuit and a second air circuit. The fan rotor is rotatable about an axis. The core flowpath includes a core inlet next to and downstream of the fan rotor. The bypass flowpath includes a bypass inlet next to and downstream of the fan rotor. The inter-flowpath structure includes a structure leading edge, a structure inner side and a structure outer side. The inter-flowpath structure projects axially to the structure leading edge. The inter-flowpath structure extends radially between the structure inner side and the structure outer side. The inter-flowpath structure is disposed radially between and partially forms the core inlet and the bypass inlet at the structure leading edge. The structure inner side borders the core flowpath. The structure outer side borders the bypass flowpath. The first air circuit includes a first circuit inlet fluidly coupled to the core flowpath and a first circuit outlet fluidly coupled to the bypass flowpath. The first circuit inlet is disposed along the structure inner side. The first circuit outlet is disposed along the structure outer side. The second air circuit includes a second circuit inlet fluidly coupled to the core flowpath and a second circuit outlet fluidly coupled to the bypass flowpath. The second circuit inlet is disposed along the structure inner side. The second circuit outlet is disposed along the structure outer side. The first circuit inlet and the second circuit inlet are disposed to opposing lateral sides of a vertical bottom position of the inter-flowpath structure. The first circuit inlet and the second circuit inlet are each circumferentially offset from the vertical bottom position of the inter-flowpath structure by twenty degrees and sixty degrees about the axis.

According to still another aspect of the present disclosure, another assembly is provided for an aircraft propulsion system. This assembly includes a fan rotor, an engine core, a core flowpath, a bypass flowpath, an inter-flowpath structure, a first air circuit and a second air circuit. The engine core is configured to drive rotation of the fan rotor about an axis. The engine core includes a compressor section, a combustor section and a turbine section. The compressor section includes a compressor rotor. The core flowpath includes a core inlet and a core exhaust. The core flowpath extends through the compressor section, the combustor section and the turbine section from the core inlet to the core exhaust. The bypass flowpath includes a bypass inlet and bypasses the engine core. The inter-flowpath structure includes a structure leading edge, a structure inner side and a structure outer side. The inter-flowpath structure projects axially to the structure leading edge next to and downstream of the fan rotor. The inter-flowpath structure is disposed radially between and partially forms the core inlet and the bypass inlet at the structure leading edge. The structure inner side borders the core flowpath. The structure outer side borders the bypass flowpath. The first air circuit includes a first circuit inlet fluidly coupled to the core flowpath and a first circuit outlet fluidly coupled to the bypass flowpath. The first circuit inlet is disposed along the structure inner side and is upstream of the compressor rotor along the core flowpath. The first circuit outlet is disposed along the structure outer side. The second air circuit includes a second circuit inlet fluidly coupled to the core flowpath and a second circuit outlet fluidly coupled to the bypass flowpath. The second circuit inlet is disposed at or downstream of the compressor rotor along the core flowpath. The second circuit outlet is disposed along the structure outer side next to and is downstream of the first circuit outlet.

The assembly may also include a first flow regulator configured to regulate airflow through the first air circuit from the core flowpath to the bypass flowpath.

The assembly may also include a first compressor rotor and a second compressor rotor rotationally independent and downstream of the first compressor rotor along the core flowpath. The first circuit inlet and the second circuit inlet may each be disposed upstream of the first compressor rotor along the core flowpath.

The assembly may also include a flow regulator configured to regulate airflow through the first air circuit and/or the second air circuit from the core flowpath to the bypass flowpath.

The compressor section may include a first compressor rotor and a second compressor rotor rotationally independent and downstream of the first compressor rotor. The circuit inlet may be disposed upstream of the first compressor rotor along the core flowpath.

An upstream section of the core flowpath projecting longitudinally from the core inlet to a location of the circuit inlet may be uninterrupted.

The assembly may also include a plurality of stator vanes disposed along the core flowpath between the core inlet and a location of the circuit inlet. The stator vanes may be arranged circumferentially about the axis. Each of the stator vanes may extend radially across the core flowpath.

The assembly may also include a plurality of stator vanes disposed along the core flowpath between a location of the circuit inlet and the compressor section. The stator vanes may be arranged circumferentially about the axis. Each of the stator vanes may extend radially across the core flowpath.

The assembly may also include a plurality of compressor inlet vanes disposed along the core flowpath between the stator vanes and a compressor rotor in the compressor section. The compressor inlet vanes may be arranged circumferentially about the axis. Each of the compressor inlet vanes may extend radially across the core flowpath.

The air circuit may be a first air circuit. The circuit inlet may be a first circuit inlet. The circuit outlet may be a first circuit outlet. The assembly may also include: a compressor rotor disposed in the compressor section; and a second air circuit including a second circuit inlet fluidly coupled to the core flowpath and a second circuit outlet fluidly coupled to the bypass flowpath. The second circuit inlet may be disposed along the core flowpath at or downstream of the compressor rotor. The second circuit outlet may be disposed along the bypass flowpath next to and downstream of the circuit inlet.

The assembly may also include a plurality of guide vanes disposed along the bypass flowpath downstream of a location of the circuit outlet. The guide vanes may be arranged circumferentially about the axis. Each of the guide vanes may extend radially across the bypass flowpath.

The assembly may also include a plurality of guide vanes disposed along the bypass flowpath between the bypass inlet and a location of the circuit outlet. The guide vanes may be arranged circumferentially about the axis. Each of the guide vanes may extend radially across the bypass flowpath.

The circuit outlet may be disposed in a vertical bottom half of the inter-flowpath structure.

A vertical top half of the inter-flowpath structure, vertically above the vertical bottom half of the inter-flowpath structure, may be circumferentially and axially uninterrupted by an air circuit aperture.

The assembly may also include a flow regulator configured to regulate airflow through the air circuit from the core flowpath to the bypass flowpath.

The flow regulator may be configured to: open the air circuit during a first mode; and close the air circuit during a second mode.

The flow regulator may include a regulator body. The regulator body may be configured to move circumferentially about the axis to regulate the airflow through the air circuit from the core flowpath to the bypass flowpath.

The air circuit may be a first air circuit. The circuit inlet may be a first circuit inlet. The circuit outlet may be a first circuit outlet. The assembly may also include a second air circuit including a second circuit inlet fluidly coupled to the core flowpath and a second circuit outlet fluidly coupled to the bypass flowpath. The second air circuit may extend within the inter-flowpath structure from the second circuit inlet to the second circuit outlet. The second circuit inlet may be disposed along the structure inner side and upstream of the compressor section. The second circuit outlet may be disposed along the structure outer side.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIGS. 2A and 2B are schematic illustrations of a portion of the aircraft propulsion system with a flow regulator for an air circuit in various arrangements.
FIG. 3 is a schematic cross-sectional illustration of an inter-flowpath structure with multiple air circuits.
FIG. 4 is a cross-sectional illustration of the inter-flowpath structure with a single air circuit.
FIGS. 5A and 5B are schematic cross-sectional illustrations of the inter-flowpath structure with the flow regulator in various arrangements.
FIG. 6 is a schematic illustration of a portion of the aircraft propulsion system with another inter-flowpath structure arrangement.
FIG. 7 is a schematic illustration of a portion of the aircraft propulsion system with still another inter-flowpath structure arrangement.

### DETAILED DESCRIPTION

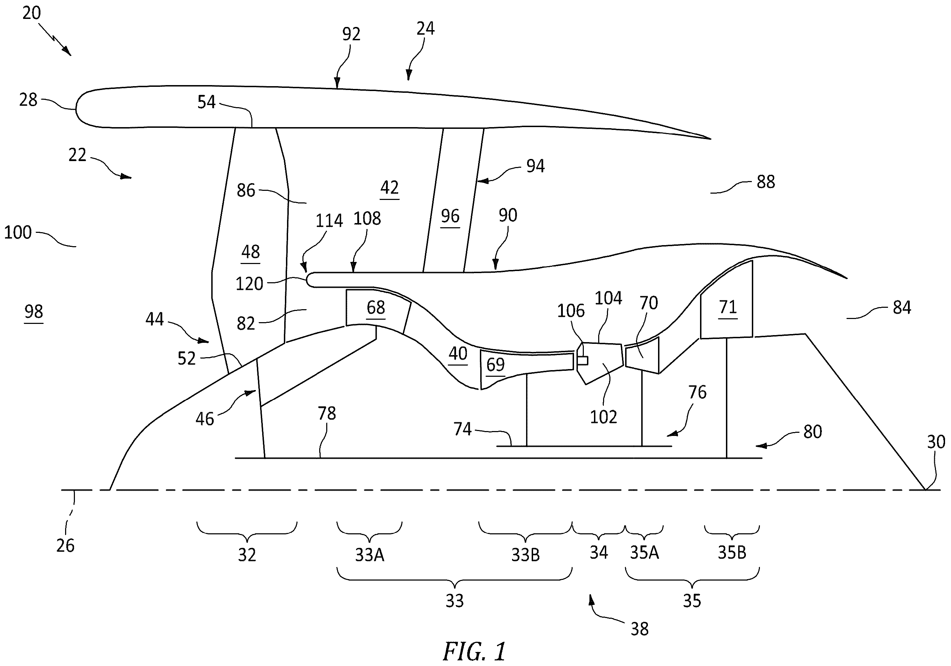

FIG. 1 illustrates a propulsion system 20 for an aircraft. The aircraft may be an airplane, a drone (e.g., an unmanned aerial vehicle (UAV)), or any other manned or unmanned aerial vehicle or system. The aircraft propulsion system 20 of FIG. 1 includes a gas turbine engine 22 (e.g., a turbofan engine) housed within a stationary housing structure 24. The aircraft propulsion system 20 extends axially along an axis 26 between an axial upstream, forward end 28 of the aircraft propulsion system 20 and an axial downstream, aft end 30 of the aircraft propulsion system 20. Briefly, the propulsion system axis 26 may be a centerline axis of the aircraft propulsion system 20, the turbine engine 22, the housing structure 24 and/or one or more of members of the turbine engine 22 and/or the housing structure 24. The propulsion system axis 26 may also or alternatively be a rotational axis for one or more members of the turbine engine 22.

The aircraft propulsion system 20 and its turbine engine 22 of FIG. 1 include a fan section 32, a compressor section 33, a combustor section 34 and a turbine section 35. The compressor section 33 of FIG. 1 includes a low pressure compressor (LPC) section 33A and a high pressure compressor (HPC) section 33B. The turbine section 35 of FIG. 1 includes a high pressure turbine (HPT) section 35A and a low pressure turbine (LPT) section 35B. At least (or only) the LPC section 33A, the HPC section 33B, the combustor section 34, the HPT section 35A and the LPT section 35B collectively form a core 38 of the turbine engine 22. The aircraft propulsion system 20 and its turbine engine 22 of FIG. 1 also include an inner core flowpath 40 (e.g., an annular core flowpath) and an outer bypass flowpath 42 (e.g., an annular bypass flowpath).

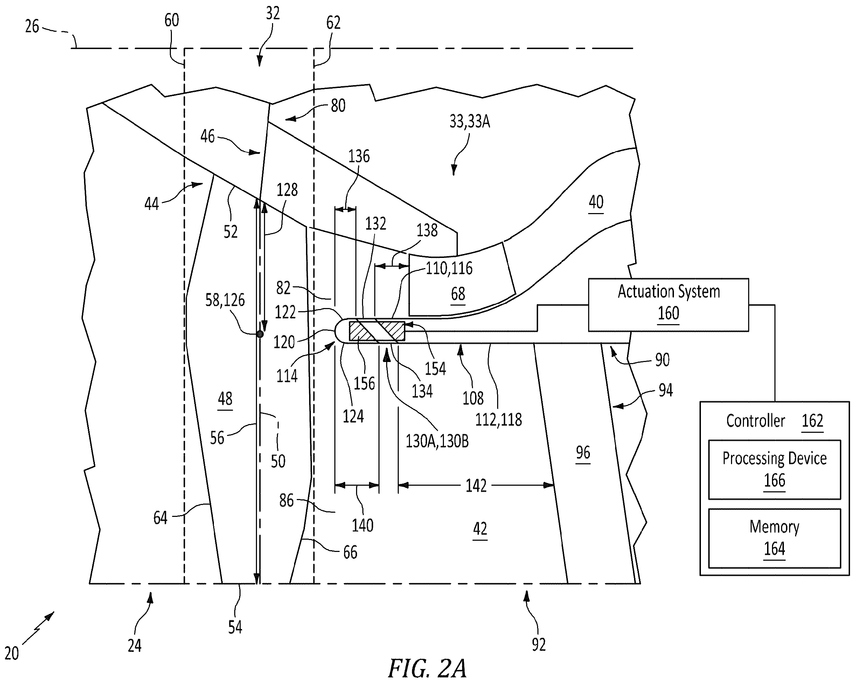

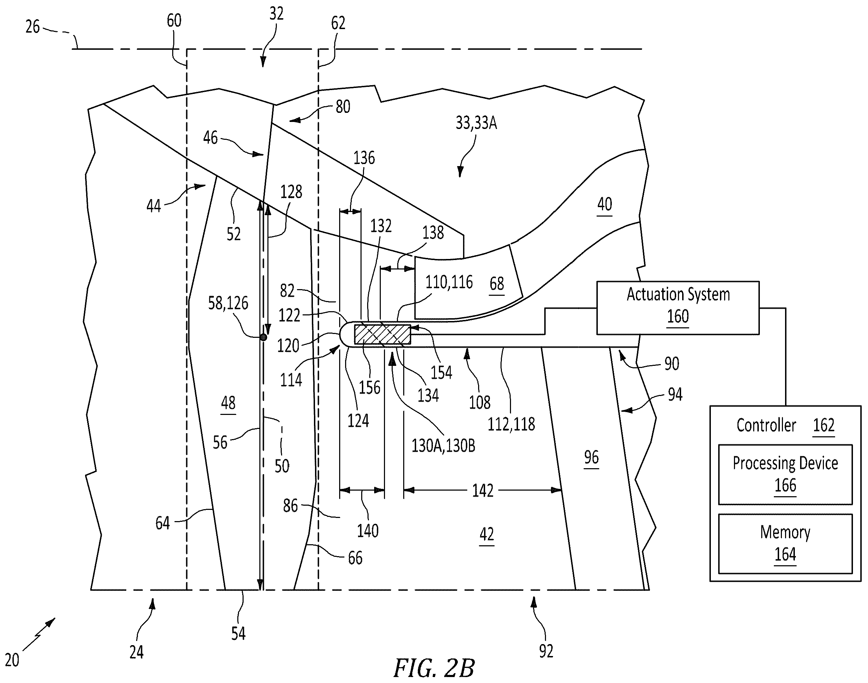

Referring to FIGS. 2A and 2B, the fan section 32 includes a bladed fan rotor 44. This fan rotor 44 includes a rotor base 46 (e.g., a disk or a hub) and a plurality of fan blades 48 (e.g., airfoils). The fan blades 48 are arranged and may be equispaced circumferentially about the rotor base 46 and the propulsion system axis 26 in an array; e.g., an annular array. The fan blades 48 are connected to (e.g., formed integral with or otherwise attached to) the rotor base 46. Each of the fan blades 48 projects spanwise along a span line 50 of the respective fan blade 48 (e.g., radially relative to the propulsion system axis 26) out from an inner platform surface 52 of the fan rotor 44 to a distal tip 54 of the respective fan blade 48. Each fan blade 48 thereby has a spanwise height 56 (e.g., a radial height) measured spanwise along the respective span line 50 from the inner platform surface 52 to the fan blade tip 54. This spanwise height 56 of FIGS. 2A and 2B is measured at a height reference location 58 disposed at an intermediate location (e.g., a midpoint) between a leading edge plane 60 and a trailing edge plane 62. The leading edge plane 60 is a reference plane perpendicular to the propulsion system axis 26 at respective leading edges 64 of the fan blades 48, for example at an intermediate span position between the inner platform surface 52 and the fan blade tips 54. The trailing edge plane 62 is a reference plane perpendicular to the propulsion system axis 26 at respective trailing edges 66 of the fan blades 48, for example at an intermediate span position between the inner platform surface 52 and the fan blade tips 54. The present disclosure, however, is not limited to such an exemplary reference basis for measuring the spanwise height 56. For example, the height reference location 58 may alternatively be disposed along the leading edge plane 60 or the trailing edge plane 62.

Referring to FIG. 1, the LPC section 33A includes a bladed low pressure compressor (LPC) rotor 68. The HPC section 33B includes a bladed high pressure compressor (HPC) rotor 69. The HPT section 35A includes a bladed high pressure turbine (HPT) rotor 70. The LPT section 35B includes a bladed low pressure turbine (LPT) rotor 71. Each of these engine rotors 68-71 includes a rotor base (e.g., a disk or a hub) and a plurality of rotor blades (e.g., airfoils, vanes, etc.). The rotor blades may be arranged into one or more stages axially along the respective engine rotor 68-71 and longitudinally along the core flowpath 40. The rotor blades in each stage are arranged and may be equispaced circumferentially around the respective rotor base in an annular array. Each of the rotor blades is connected to (e.g., formed integral with or otherwise attached to) the respective rotor base. Each of the rotor blades projects spanwise (e.g., radially) out from the respective rotor base, substantially across the core flowpath 40, to a distal tip of the respective rotor blade. Note, although not shown for ease of illustration, each rotor blade stage may be disposed next to and upstream or downstream of a respective neighboring stage of stator vanes for that respective engine section 33A, 33B, 35A, 35B along the core flowpath 40. At least some of the rotor blade stages may also be disposed between a neighboring pair of upstream and downstream stages of stator vanes along the core flowpath 40.

The HPC rotor 69 is coupled to and rotatable with the HPT rotor 70. The HPC rotor 69 of FIG. 1, for example, is connected to the HPT rotor 70 through a high speed shaft 74. At least (or only) the HPC rotor 69, the HPT rotor 70 and the high speed shaft 74 collectively form a high speed rotating structure 76. This high speed rotating structure 76 of FIG. 1 and its members 69, 70 and 74 are rotatable about the propulsion system axis 26. However, it is contemplated the high speed rotating structure 76 may alternatively be rotatable about another axis laterally and/or angularly offset from the rotational axis of the fan rotor 44 and/or the centerline axis of the turbine engine 22.

The fan rotor 44 and/or the LPC rotor 68 are coupled to and rotatable with the LPT rotor 71. The LPC rotor 68 of FIG. 1, for example, is connected to the fan rotor 44. The fan rotor 44 of FIG. 1 is connected to the LPT rotor 71 through a low speed shaft 78. The LPC rotor 68 of FIG. 1 is thereby coupled to the LPT rotor 71 through the fan rotor 44 and the low speed shaft 78. At least (or only) the fan rotor 44, the LPC rotor 68, the LPT rotor 71 and the low speed shaft 78 collectively form a low speed rotating structure 80. This low speed rotating structure 80 of FIG. 1 and its members 44, 68, 71 and 78 are rotatable about the propulsion system axis 26. The present disclosure, however, is not limited to such an exemplary rotating structure arrangement. For example, it is contemplated the LPC rotor 68 may alternatively be connected to the low speed shaft 78 independent of the fan rotor 44. In addition or alternatively, it is contemplated the fan rotor 44 and/or the LPC rotor 68 may be coupled to the low speed shaft 78 through a geartrain; e.g., a transmission, a speed change device, an epicyclic geartrain, etc.

The core flowpath 40 extends sequentially through the LPC section 33A, the HPC section 33B, the combustor section 34, the HPT section 35A and the LPT section 35B from an airflow inlet 82 into the core flowpath 40 to a combustion products exhaust 84 out from the core flowpath 40. The bypass flowpath 42 extends through a bypass duct from an airflow inlet 86 into the bypass flowpath 42 to an airflow exhaust 88 from the bypass flowpath 42. The bypass flowpath 42 and its bypass duct are configured to bypass (e.g., are disposed radially outboard of and extend along) the engine core 38 and its engine sections 33A-35B. The core inlet 82 and the bypass inlet 86 are axially aligned along the propulsion system axis 26. The core inlet 82 and the bypass inlet 86 of FIG. 1 are also arranged axially next to and downstream of the fan rotor 44 and its fan blades 48. The core inlet 82 and the bypass inlet 86 may thereby be arranged downstream of the fan rotor 44 and its fan blades 48, without (e.g., any) other elements axially therebetween to obstruct, turn and/or otherwise influence the air propelled by the fan rotor 44 into the core inlet 82 and the bypass inlet 86 for example.

The fan section 32, the LPC section 33A, the HPC section 33B, the combustor section 34, the HPT section 35A and the LPT section 35B may be arranged sequentially along the propulsion system axis 26 within the housing structure 24. The housing structure 24 of FIG. 1, for example, includes an inner housing structure 90 and an outer housing structure 92. The housing structure 24 may also include a guide vane structure 94; e.g., a fan exit guide vane (FEGV) structure.

The inner housing structure 90 is disposed radially outboard of, extends axially along and may circumscribe one or more or all of the engine sections 33A-35B and the engine rotors 68-71. The inner housing structure 90 may thereby house and provide a support structure for the respective engine sections 33A-35B and the engine rotors 68-71. The inner housing structure 90 of FIG. 1 also forms a radial inner peripheral boundary of the bypass flowpath 42.

The outer housing structure 92 is disposed radially outboard of, extends axially along and may circumscribe the fan section 32 and its fan rotor 44 as well as the inner housing structure 90. The outer housing structure 92 may thereby house the fan section 32 and its fan rotor 44 as well as cover at least a forward upstream portion of the inner housing structure 90. The outer housing structure 92 of FIG. 1 also forms a radial outer peripheral boundary of the bypass flowpath 42.

The guide vane structure 94 includes a plurality of guide vanes 96. These guide vanes 96 are arranged and may be equispaced circumferentially around the inner housing structure 90 and the propulsion system axis 26 in an array; e.g., an annular array. The guide vanes 96 are disposed within the bypass flowpath 42. Each guide vane 96 of FIG. 1, for example, projects radially across the bypass flowpath 42 from the inner housing structure 90 to the outer housing structure 92. The guide vanes 96 may also be connected to the inner housing structure 90 and the outer housing structure 92 to structurally tie the inner housing structure 90 and the outer housing structure 92 together.

During operation of the aircraft propulsion system 20 of FIG. 1, ambient air from an environment 98 external to the aircraft and its aircraft propulsion system 20 enters the aircraft propulsion system 20 and its turbine engine 22 through an airflow inlet 100. This air is propelled by the rotating fan rotor 44 in a downstream, aft direction towards the propulsion system aft end 30.

An outer stream of the air propelled by the rotating fan rotor 44 is directed into the bypass flowpath 42 through its bypass inlet 86, which air entering the bypass flowpath 42 may be referred to as "bypass air". The guide vane structure 94 conditions (e.g., straightens out, de-swirls, etc.) the flow of the bypass air within the bypass duct. This conditioned bypass air is subsequently directed out of the aircraft propulsion system 20 through the bypass exhaust 88 to provide forward thrust. This propulsion of the bypass air may account for a majority of the forward thrust generated by the aircraft propulsion system 20 and its turbine engine 22 of FIG. 1.

An inner stream of the air propelled by the rotating fan rotor 44 is directed into the core flowpath 40 through its core inlet 82, which air entering the core flowpath 40 may be referred to as "core air". This core air is compressed by the LPC rotor 68 and the HPC rotor 69 and is directed into a combustion chamber 102 (e.g., annular combustion chamber) of a combustor 104 (e.g., annular combustor) in the combustor section 34. Fuel is injected into the combustion chamber 102 by one or more fuel injectors 106 and mixed with the compressed core air to provide a fuel-air mixture. This fuel-air mixture is ignited and combustion products thereof flow through and sequentially drive rotation of the HPT rotor 70 and the LPT rotor 71. The rotation of the HPT rotor 70 and the LPT rotor 71 respectively drive rotation of the HPC rotor 69 and the LPC rotor 68 and, thus, compression of the air received from the core inlet 82. The rotation of the LPT rotor 71 also drives rotation of the fan rotor 44.

Referring to FIGS. 2A and 2B, the inner housing structure 90 includes an inter-flowpath structure 108 radially between the core flowpath 40 and the bypass flowpath 42. This inter-flowpath structure 108 of FIGS. 2A and 2B is next to and downstream of the fan rotor 44. The inter-flowpath structure 108 of FIGS. 2A and 2B includes a radial inner wall 110, a radial outer wall 112 and an airflow splitter 114.

The inner wall 110 projects axially along the propulsion system axis 26, in an upstream, forward direction towards the fan rotor 44, to the airflow splitter 114. The inner wall 110 extends circumferentially about (e.g., completely around) the propulsion system axis 26. The inner wall 110 may thereby have a full-hoop (e.g., tubular) geometry. The inner wall 110 is disposed radially outboard of and borders an upstream section of the core flowpath 40 at or near the core inlet 82. A radial inner side 116 of the inner wall 110 may thereby form a radial outer peripheral boundary of the core flowpath 40, for example between (a) the core inlet 82 and (b) the compressor section 33 and its members 33A and 68.

The outer wall 112 is spaced radially outboard of the inner wall 110. The outer wall 112 projects axially along the propulsion system axis 26, in the upstream, forward direction towards the fan rotor 44, to the airflow splitter 114. The outer wall 112 extends circumferentially about (e.g., completely around) the propulsion system axis 26. The outer wall 112 may thereby have a full-hoop (e.g., tubular) geometry. This outer wall 112 of FIGS. 2A and 2B also extends axially along (e.g., axially overlaps) and extends circumferentially about (e.g., circumscribes) the inner wall 110. The outer wall 112 is disposed radially inboard of and borders an upstream section of the bypass flowpath 42 at or near the bypass inlet 86. A radial outer side 118 of the outer wall 112 may thereby form a radial inner peripheral boundary of the bypass flowpath 42, for example between (a) the bypass inlet 86 and (b) the guide vane structure 94 and its guide vanes 96.

The airflow splitter 114 is a wedge-shaped member (e.g., a nose lip) of the inter-flowpath structure 108 configured to split the air propelled by the rotating fan rotor 44 into (a) the outer stream directed into the bypass flowpath 42 through its bypass inlet 86 and (b) the inner stream directed into the core flowpath 40 through its core inlet 82. This airflow splitter 114 also provides an intersection between and may respectively include upstream, forward portions of the inner wall 110 and the outer wall 112. This airflow splitter 114 projects axially along the propulsion system axis 26, in the upstream, forward direction towards the fan rotor 44, to an upstream, forward leading edge 120 of the airflow splitter 114. This splitter leading edge 120 is also an upstream, forward leading edge of the inter-flowpath structure 108. A radial split line of the inner and the outer stream of air propelled by the fan rotor 44 may extend axially forward from the splitter leading edge 120 to the airflow inlet 100 (see FIG. 1).

The airflow splitter 114 extends radially between a radial inner side 122 of the airflow splitter 114 and a radial outer side 124 of the airflow splitter 114. The splitter inner side 122 may be configured as an extension of or may otherwise be connected to the inner wall inner side 116. This splitter inner side 122 is disposed radially outboard of and borders the upstream section of the core flowpath 40. The splitter inner side 122 thereby forms the outer peripheral boundary of the core flowpath 40 between the inner wall 110 and the core inlet 82. Moreover, the airflow splitter 114 and its splitter inner side 122 of FIGS. 2A and 2B form a radial outer peripheral boundary of the core inlet 82 itself at the splitter leading edge 120. Similarly, the splitter outer side 124 may be configured as an extension of or may otherwise be connected to the outer wall outer side 118. This splitter outer side 124 is disposed radially inboard of and borders the upstream section of the bypass flowpath 42. The splitter outer side 124 thereby forms the inner peripheral boundary of the bypass flowpath 42 between the outer wall 112 and the bypass inlet 86. Moreover, the airflow splitter 114 and its splitter outer side 124 of FIGS. 2A and 2B form a radial inner peripheral boundary of the bypass inlet 86 itself at the splitter leading edge 120. The airflow splitter 114 and its splitter inner side 122 and its splitter outer side 124 extend circumferentially about (e.g., completely around) the propulsion system axis 26. The airflow splitter 114 may thereby have a full-hoop (e.g., annular) geometry.

The airflow splitter 114 and its splitter leading edge 120 are radially aligned with a reference point 126 along each fan blade 48. This reference point 126 is disposed a spanwise distance 128 from the inner platform surface 52 along the respective span line 50. The spanwise distance 128 may be between one-tenth (1/10) of the spanwise height 56 and one-half (1/2) of the spanwise height 56. More particularly, the spanwise distance 128 may be equal to or greater than two-tenths (2/10) of the spanwise height 56 or even three-tenths (3/10) of the spanwise height 56. The airflow splitter 114 and its splitter leading edge 120 are thereby radially aligned with an intermediation portion of each fan blade 48 along its span. The reference point 126 of FIGS. 2A and 2B is axially aligned along the propulsion system axis 26 with an intermediate location along the respective fan blade 48 between its blade leading edge 64 and its blade trailing edge 66, such as the height reference location 58. However, it is contemplated the reference point 126 may alternatively be on the leading edge plane 60 or the trailing edge plane 62.

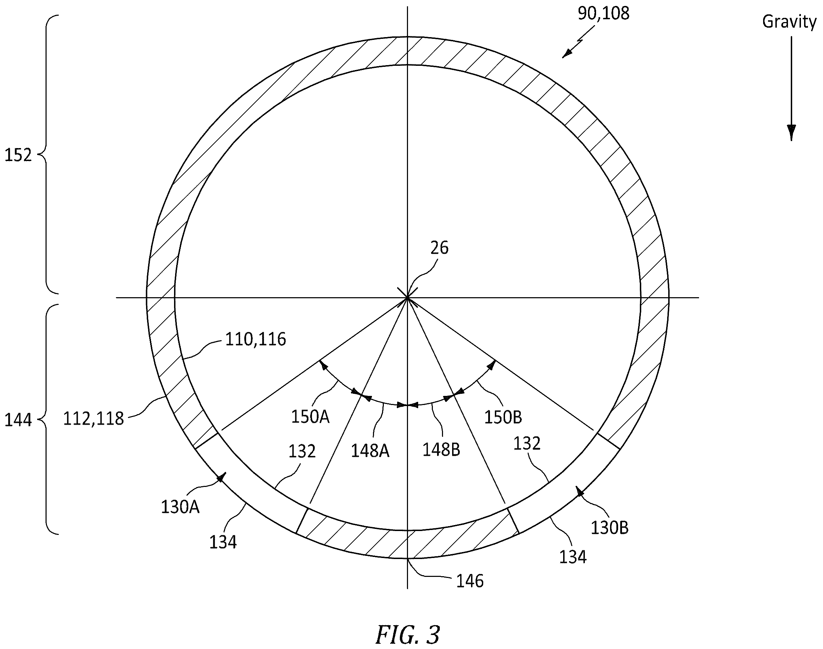

The aircraft propulsion system 20 and its turbine engine 22 of FIGS. 2A and 2B includes one or more air circuits 130A and 130B (generally referred to as "130") (e.g., bleed circuits); see also FIG. 3. Each of these air circuits 130 extends longitudinally from an airflow inlet 132 into the respective air circuit 130 to an airflow outlet 134 from the respective air circuit 130. Each air circuit 130 may be configured as an airflow aperture (e.g., a port, a window) extending radially across the inter-flowpath structure 108 from the inner wall inner side 116 to the outer wall outer side 118. Alternatively, each air circuit 130 may be configured as a longitudinally extended passage extending radially across the inter-flowpath structure 108 from the inner wall inner side 116 to the outer wall outer side 118.

Each circuit inlet 132 fluidly couples the respective air circuit 130 to an air source such as the core flowpath 40. The circuit inlet 132 of FIGS. 2A and 2B, for example, is disposed longitudinally along the core flowpath 40 and the inner wall 110, upstream of the compressor section 33 and its members 33A and 68. More particularly, the circuit inlet 132 of FIGS. 2A and 2B is disposed longitudinally along the core flowpath 40 between (a) the core inlet 82 and (b) the compressor section 33 and its members 33A and 68. Each circuit inlet 132 is longitudinally spaced from the core inlet 82 along the core flowpath 40 by an inlet-to-core inlet distance 136. Each circuit inlet 132 is longitudinally spaced from an upstream end of the LPC rotor 68 along the core flowpath 40 by an inlet-to-rotor distance 138. This inlet-to-rotor distance 138 may be equal to or greater than the inlet-to-core inlet distance 136. Each circuit inlet 132 may be configured as or otherwise include a bleed port (or multiple bleed ports) and/or a scoop (or multiple scoops) in and/or along the outer peripheral boundary of the core flowpath 40.

Each circuit outlet 134 fluidly couples the respective air circuit 130 to an air sink such as the bypass flowpath 42. The circuit outlet 134 of FIGS. 2A and 2B, for example, is disposed longitudinally along the bypass flowpath 42 and the outer wall 112, for example upstream of the guide vane structure 94 and its guide vanes 96. More particularly, the circuit outlet 134 of FIGS. 2A and 2B is disposed longitudinally along the bypass flowpath 42 between (a) the bypass inlet 86 and (b) the guide vane structure 94 and its guide vanes 96. Each circuit outlet 134 is longitudinally spaced from the bypass inlet 86 along the bypass flowpath 42 by an inlet-to-bypass inlet distance 140. Each circuit outlet 134 is longitudinally spaced from an upstream end of the guide vane structure 94 along the bypass flowpath 42 by an inlet-to-structure distance 142. This inlet-to-structure distance 142 may be equal to or greater than the inlet-to-bypass inlet distance 140. The inlet-to-structure distance 142 may also be greater than the inlet-to-rotor distance 138. Each circuit outlet 134 may be configured as or otherwise include an orifice (or multiple orifices) piercing the outer wall outer side 118 along the inner peripheral boundary of the bypass flowpath 42.

Referring to FIG. 3, the air circuits 130 may be arranged with a vertical bottom section 144 (e.g., half) of the inter-flowpath structure 108. Herein, the term "vertical" may describe a direction along an axis parallel to a force of gravity when, for example, the propulsion system axis 26 is substantially horizontal and perpendicular to the force of gravity. Such an arrangement may occur, for example, while the aircraft with the aircraft propulsion system 20 (see FIG. 1) is on ground and/or in substantially level flight. The first air circuit 130A of FIG. 3 is disposed to a first side (e.g., a lefthand side in FIG. 3) of the structure bottom section 144. The second air circuit 130B of FIG. 3 is disposed to a second side (e.g., a righthand side in FIG. 3) of the structure bottom section 144. The air circuits 130 of FIG. 3 are thereby arranged to opposing lateral sides of a vertical bottom position 146 (e.g., a bottom-dead-center (BDC) position) along the structure bottom section 144. The air circuits 130 of FIG. 3 are also arranged to opposing lateral sides of the propulsion system axis 26, where the propulsion system axis 26 of FIG. 3 is laterally aligned with the vertical bottom position 146. With this arrangement, the vertical bottom position 146 and the propulsion system axis 26 are disposed and may be centered laterally between the air circuits 130.

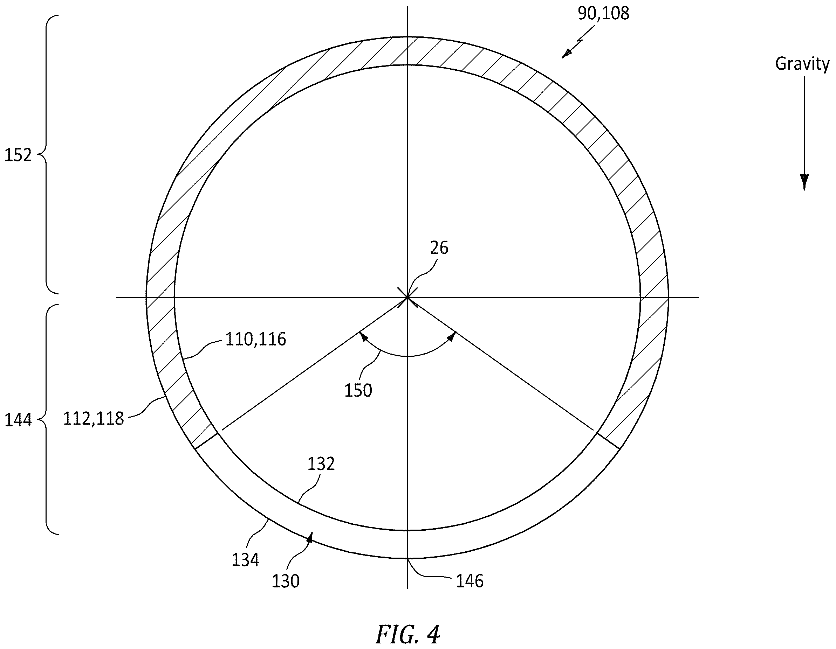

Each air circuit 130A, 130B and one or more of its members 132 and/or 134 may be circumferentially offset and spaced from the vertical bottom position 146 about the propulsion system axis 26 by an offset angle 148A and 148B (generally referred to as "148"). This offset angle 148 is greater than zero degrees (>0°) and less than, for example, seventy degrees (<70°). The offset angle 148 of FIG. 3, for example, is between (a) ten degrees (10°) or twenty degrees (20°) and (b) fifty degrees (50°) or sixty degrees (60°); e.g., about thirty degrees (30°) or forty-five degrees (45°). Each air circuit 130A, 130B and one or more of its members 132 and/or 134 may have a circumferential dimension (e.g., a circumferential width) that extends about the propulsion system axis 26 a dimensional angle 150A and 150B (generally referred to as "150"). This dimensional angle 150 is greater than ten degrees (>10°) and less than, for example, sixty degrees (<60°). The present disclosure, however, is not limited to such an exemplary arrangement. For example, referring to FIG. 4, the first air circuit and the second air circuit may be replaced by a single air circuit 130 laterally centered in the structure bottom section 144. Here, the dimensional angle 150 may be greater than thirty degrees (>30°) and less than, for example, one-hundred and forty degrees (<140°).

Referring to FIG. 3, a vertical top section 152 (e.g., half) of the inter-flowpath structure 108 may be configured without any air circuits. The structure top section 152 of FIG. 3, for example, may be circumferentially and axially uninterrupted by an air circuit aperture such as the circuit inlets 132 or the circuit outlets 134. The present disclosure, however, is not limited to such an exemplary arrangement.

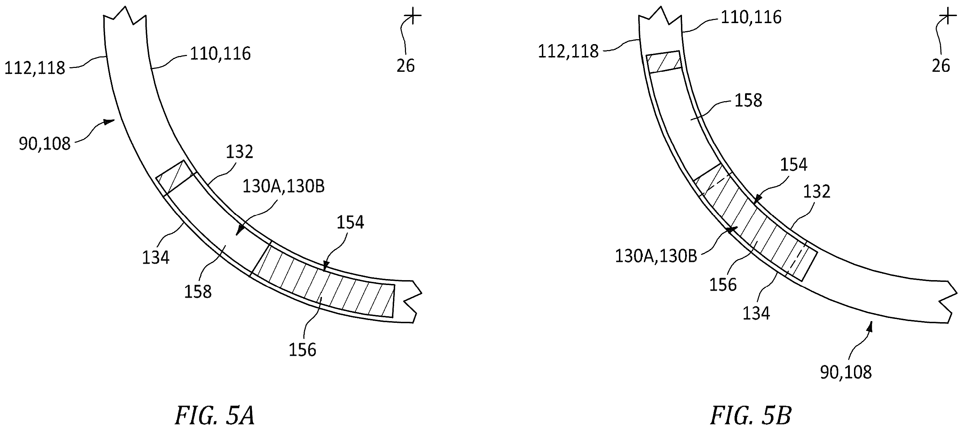

Referring to FIGS. 5A and 5B, each air circuit 130 may be configured with a flow regulator 154. This flow regulator 154 is configured to regulate airflow directed through the respective air circuit 130 from the circuit inlet 132 to the circuit outlet 134. For example, each flow regulator 154 of FIGS. 5A and 5B includes a regulator body 156 disposed between the inner wall 110 and the outer wall 112. This regulator body 156 is configured to move (e.g., translate) circumferentially about the propulsion system axis 26 between an open position (e.g., see FIGS. 2A and 5A) and a closed position (e.g., see FIGS. 2B and 5B). Of course, it is contemplated the regulator body 156 may also move to one or more intermediate positions between the open position of FIG. 5A and the closed position of FIG. 5B. In the open position of FIG. 5A, a port 158 through the regulator body 156 is circumferentially and axially aligned with the circuit inlet 132 and the circuit outlet 134 of the respective air circuit 130. The regulator port 158 thereby fluidly couples the circuit inlet 132 and the circuit outlet 134 of the respective air circuit 130. By contrast, in the closed position of FIG. 5B, the regulator port 158 is circumferentially offset from the circuit inlet 132 and/or the circuit outlet 134 of the respective air circuit 130. The regulator body 156 thereby fluidly decouples (or facilitates a minimum flow between) the circuit inlet 132 and the circuit outlet 134 of the respective air circuit 130. The present disclosure, however, is not limited to such an exemplary flow regulator arrangement. For example, a single regulator body with multiple ports may be configured to control flow through all of the air circuits 130.

Each flow regulator 154 and its regulator body 156 of FIGS. 2A and 2B is operatively coupled to an actuation system 160. Here, the actuation system 160 may be dedicated to the respective flow regulator 154 and its regulator body 156. Alternatively, the actuation system 160 may be coupled to the flow regulator 154 for each air circuit 130. The actuation system 160 of FIGS. 2A and 2B is configured to move the respective regulator body 156 between the open position of FIG. 2A and the closed position of FIG. 2B. This actuation system 160 is operatively controlled by a controller 162.

The controller 162 may be configured as an onboard engine controller; e.g., an electronic engine controller (EEC), an electronic control unit (ECU), a full-authority digital engine controller (FADEC), etc. The controller 162 may be implemented with a combination of hardware and software. The hardware may include memory 164 and at least one processing device 166, which processing device 166 may include one or more single-core and/or multi-core processors. The hardware may also or alternatively include analog and/or digital circuitry other than that described above.

The memory 164 is configured to store software (e.g., program instructions) for execution by the processing device 166, which software execution may control and/or facilitate performance of one or more operations such as those described herein. The memory 164 may be a non-transitory computer readable medium. For example, the memory 164 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

During air circuit operation, the controller 162 may receive data from various sensors. Based on this data, the controller 162 may identify and/or determine various operational parameters. Examples of these operational parameters include, but are not limited to: one or more atmospheric/flight conditions; one or more aircraft operating conditions; and/or one or more propulsion system operating conditions. Examples of the atmospheric/flight conditions include, but are not limited to: aircraft altitude; aircraft speed (e.g., Mach number); day type (e.g., standard day or hot day); and/or humidity. Examples of the aircraft operating conditions include, but are not limited to: phase of flight (e.g., aircraft takeoff, aircraft climb, etc.); and/or wind conditions (e.g., crosswind, headwind, tailwind, etc.). Examples of the propulsion system operating conditions include, but are not limited to: power setting; and/or exhaust gas temperature margin. Where the controller 162 determines air associated with a vortex (e.g., a ground vortex) is likely to enter the airflow inlet 100 (see FIG. 1) based on the operational parameters, the controller 162 may signal the actuation system 160 to move the respective regulator body 156 to its open position of FIGS. 2A and 5A. With each air circuit 130 open as shown in FIG. 2A, distorted air from the vortex that is directed into the core flowpath 40 through the core inlet 82 may be exhausted from the core flowpath 40 through the air circuits 130. The compressor section 33 may thereby receive less distorted core air for compression. By contrast, where the controller 162 determines such distorted air is unlikely to enter the airflow inlet 100 (see FIG. 1), the controller 162 may signal the actuation system 160 to move the respective regulator body 156 to its closed position of FIGS. 2B and 5B. With each air circuit 130 closed as shown in FIG. 2B, substantially all of the air entering the core flowpath 40 through the core inlet 82 is directed to the compressor section 33 for compression.

In some embodiments, where the controller 162 determines distorted air is likely to enter the LPC section 33A or the HPC section 33B through the core flowpath 40 (see FIG. 1) based on the operational parameters, the controller 162 may signal the actuation system 160 to move the respective regulator body 156 to its open position of FIGS. 2A and 5A. With each air circuit 130 open as shown in FIG. 2A, distorted air within the core flowpath 40 through the core inlet 82 may be exhausted from the core flowpath 40 through the air circuits 130. The compressor section 33 may thereby receive less distorted core air for compression. By contrast, where the controller 162 determines such distorted air is unlikely to enter the core flowpath 40 (see FIG. 1), the controller 162 may signal the actuation system 160 to move the respective regulator body 156 to its closed position of FIGS. 2B and 5B. With each air circuit 130 closed as shown in FIG. 2B, substantially all of the air entering the core flowpath 40 through the core inlet 82 is directed to the compressor section 33 for compression.

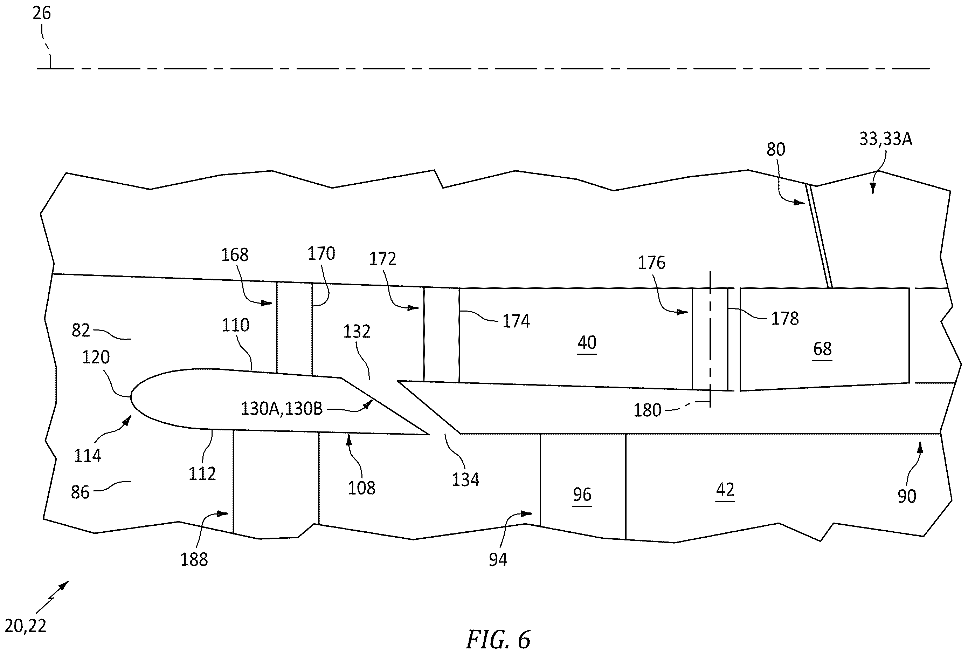

In some embodiments, referring to FIGS. 2A and 2B, an upstream section of the core flowpath 40 projecting longitudinally from the core inlet 82 to a location of each circuit inlet 132 may be uninterrupted. The upstream section of the core flowpath 40 of FIG. 6, for example, is configured without (e.g., any) elements axially between the core inlet 82 and the circuit inlet location to obstruct, turn and/or otherwise influence a flow of the core air. In other embodiments, referring to FIG. 6, a pre-air circuit vane structure 168 may be disposed in the core flowpath 40 longitudinally between the core inlet 82 and the circuit inlet location. This pre-air circuit vane structure 168 includes a plurality of stator vanes 170; e.g., core inlet vanes. These stator vanes 170 are arranged and may (or may not) be equispaced circumferentially about the propulsion system axis 26 in an array; e.g., an annular array. Each of the stator vanes 170 projects radially across the core flowpath 40 from a radial inner peripheral boundary of the core flowpath 40 to the outer peripheral boundary of the core flowpath 40.

In some embodiments, a post-air circuit vane structure 172 may be disposed in the core flowpath 40 longitudinally between the circuit inlet location and the compressor section 33 and its members 33A and 68. This post-air circuit vane structure 172 includes a plurality of stator vanes 174. These stator vanes 174 are arranged and may (or may not) be equispaced circumferentially about the propulsion system axis 26 in an array; e.g., an annular array. Each of the stator vanes 174 projects radially across the core flowpath 40 from the inner peripheral boundary of the core flowpath 40 to the outer peripheral boundary of the core flowpath 40.

In some embodiments, a compressor inlet vane structure 176 may be disposed in the core flowpath 40 longitudinally between the circuit inlet location and the compressor section 33 and its members 33A and 68. The compressor inlet vane structure 176 of FIG. 6 is also disposed longitudinally between the post-air circuit vane structure 172 and the compressor section 33 and its members 33A and 68. The compressor inlet vane structure 176 of FIG. 6, for example, is disposed next to and upstream of the LPC rotor 68. This compressor inlet vane structure 176 includes a plurality of stator vanes 178; e.g., compressor inlet vanes. These stator vanes 178 are arranged and may (or may not) be equispaced circumferentially about the propulsion system axis 26 in an array; e.g., an annular array. Each of the stator vanes 178 projects radially across the core flowpath 40 from the inner peripheral boundary of the core flowpath 40 to the outer peripheral boundary of the core flowpath 40. Each stator vane 178 of FIG. 6 may be configured as a variable vane which is pivotable about a pivot axis 180.

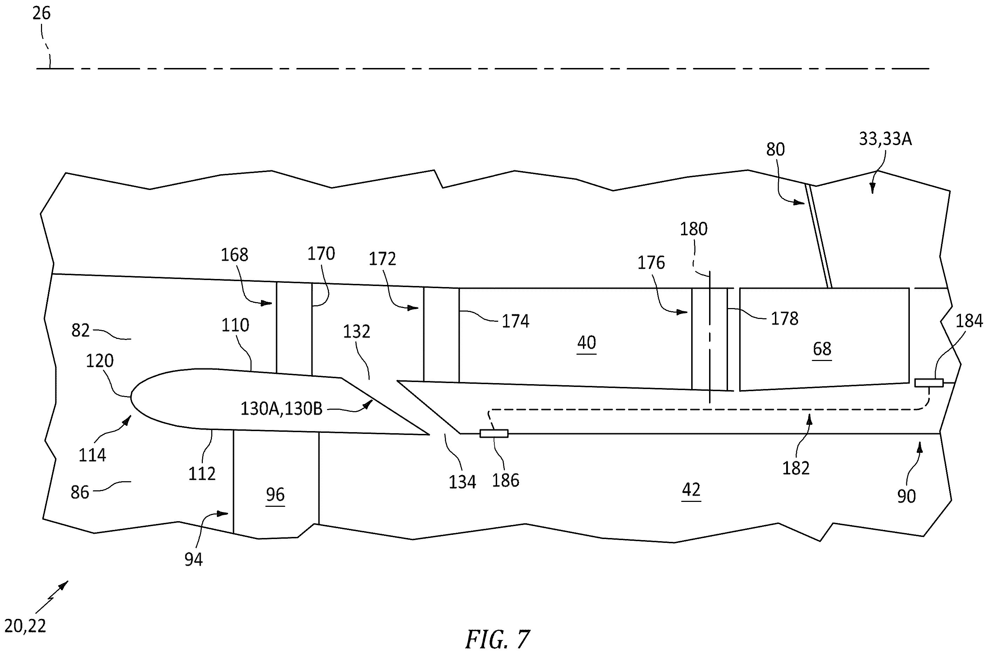

In some embodiments, referring to FIG. 7, the aircraft propulsion system 20 and its turbine engine 22 may be configured with a second downstream air circuit 182 (e.g., a bleed circuit) for each upstream air circuit 130. Each downstream air circuit 182 of FIG. 7 extends from an airflow inlet 184 into the respective downstream air circuit 182 to an airflow outlet 186 from the respective downstream air circuit 182. The downstream circuit inlet 184 may have a similar configuration to the upstream circuit inlet 132. However, the downstream circuit inlet 184 of FIG. 7 is disposed at or downstream of the LPC rotor 68; e.g., longitudinally between the LPC rotor 68 and the HPC rotor 69 (see FIG. 1) along the core flowpath 40. The downstream circuit outlet 186 may have a similar configuration to the upstream circuit outlet 134. However, the downstream circuit outlet 186 of FIG. 7 is circumferentially aligned with and downstream of the respective upstream circuit outlet 134. This downstream circuit outlet 186 is also next to (or in close proximity to) the respective upstream circuit outlet 134. With this arrangement, each downstream air circuit 182 may bleed a portion of the core air compressed by the LPC rotor 68. This bled core air may then be directed into the bypass flowpath 42 just downstream of the respective upstream circuit outlet 134. The air flowing out of each downstream air circuit 182 into the bypass flowpath 42 may thereby generate suction to help pump the air through the respective upstream air circuit 130.

In some embodiments, referring to FIGS. 2A and 2B, the guide vane structure 94 may be arranged downstream of the air circuit 130 along the bypass flowpath 42. In other embodiments, referring to FIG. 7, the guide vane structure 94 (or another guide vane structure 188; e.g., see FIG. 6) may be arranged upstream of the air circuit 130 along the bypass flowpath 42.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft propulsion system, comprising:
a fan rotor;
an engine core configured to drive rotation of the fan rotor about an axis, the engine core including a compressor section, a combustor section and a turbine section;
a core flowpath comprising a core inlet and a core exhaust, the core flowpath extending through the compressor section, the combustor section and the turbine section from the core inlet to the core exhaust;
a bypass flowpath comprising a bypass inlet and bypassing the engine core;
an inter-flowpath structure comprising a structure leading edge, a structure inner side and a structure outer side, the inter-flowpath structure projecting axially to the structure leading edge next to and downstream of the fan rotor, the inter-flowpath structure disposed radially between and partially forming the core inlet and the bypass inlet at the structure leading edge, the structure inner side bordering the core flowpath, and the structure outer side bordering the bypass flowpath; and
an air circuit comprising a circuit inlet fluidly coupled to the core flowpath and a circuit outlet fluidly coupled to the bypass flowpath, the air circuit extending within the inter-flowpath structure from the circuit inlet to the circuit outlet, the circuit inlet disposed along the structure inner side and upstream of the compressor section, and the circuit outlet disposed along the structure outer side.

2. The assembly of claim 1, wherein
the compressor section comprises a first compressor rotor and a second compressor rotor rotationally independent and downstream of the first compressor rotor; and
the circuit inlet is disposed upstream of the first compressor rotor along the core flowpath.

3. The assembly of claim 1 or 2, wherein an upstream section of the core flowpath projecting longitudinally from the core inlet to a location of the circuit inlet is uninterrupted.

4. The assembly of claim 1, 2 or 3, further comprising a plurality of stator vanes disposed along the core flowpath between the core inlet and a location of the circuit inlet, the plurality of stator vanes arranged circumferentially about the axis, and each of the plurality of stator vanes extending radially across the core flowpath.

5. The assembly of claim 1, 2 or 3, further comprising a plurality of stator vanes disposed along the core flowpath between a location of the circuit inlet and the compressor section, the plurality of stator vanes arranged circumferentially about the axis, and each of the plurality of stator vanes extending radially across the core flowpath.

6. The assembly of claim 5, further comprising a plurality of compressor inlet vanes disposed along the core flowpath between the plurality of stator vanes and a compressor rotor in the compressor section, the plurality of compressor inlet vanes arranged circumferentially about the axis, and each of the plurality of compressor inlet vanes extending radially across the core flowpath.

7. The assembly of any preceding claim, wherein the air circuit is a first air circuit, the circuit inlet is a first circuit inlet, the circuit outlet is a first circuit outlet, and the assembly further comprises:
a compressor rotor disposed in the compressor section; and
a second air circuit comprising a second circuit inlet fluidly coupled to the core flowpath and a second circuit outlet fluidly coupled to the bypass flowpath;
the second circuit inlet disposed along the core flowpath at or downstream of the compressor rotor; and
the second circuit outlet disposed along the bypass flowpath next to and downstream of the circuit inlet.

8. The assembly of any preceding claim, further comprising a plurality of guide vanes disposed along the bypass flowpath downstream of a location of the circuit outlet, the plurality of guide vanes arranged circumferentially about the axis, and each of the plurality of guide vanes extending radially across the bypass flowpath, or
further comprising a plurality of guide vanes disposed along the bypass flowpath between the bypass inlet and a location of the circuit outlet, the plurality of guide vanes arranged circumferentially about the axis, and each of the plurality of guide vanes extending radially across the bypass flowpath.

9. The assembly of any preceding claim, wherein the circuit outlet is disposed in a vertical bottom half of the inter-flowpath structure.

10. The assembly of claim 9, wherein a vertical top half of the inter-flowpath structure, vertically above the vertical bottom half of the inter-flowpath structure, is circumferentially and axially uninterrupted by an air circuit aperture.

11. The assembly of any preceding claim, further comprising a flow regulator configured to regulate airflow through the air circuit from the core flowpath to the bypass flowpath.

12. The assembly of claim 11, wherein the flow regulator is configured to open the air circuit during a first mode; and
close the air circuit during a second mode; and/or
wherein the flow regulator comprises a regulator body; and
the regulator body is configured to move circumferentially about the axis to regulate the airflow through the air circuit from the core flowpath to the bypass flowpath.

13. The assembly of any preceding claim, wherein the air circuit is a first air circuit, the circuit inlet is a first circuit inlet, the circuit outlet is a first circuit outlet, and the assembly further comprises:
a second air circuit comprising a second circuit inlet fluidly coupled to the core flowpath and a second circuit outlet fluidly coupled to the bypass flowpath;
the second air circuit extending within the inter-flowpath structure from the second circuit inlet to the second circuit outlet;
the second circuit inlet disposed along the structure inner side and upstream of the compressor section; and
the second circuit outlet disposed along the structure outer side.

14. An assembly for an aircraft propulsion system, comprising:
a fan rotor rotatable about an axis;
a core flowpath comprising a core inlet next to and downstream of the fan rotor;
a bypass flowpath comprising a bypass inlet next to and downstream of the fan rotor;
an inter-flowpath structure comprising a structure leading edge, a structure inner side and a structure outer side, the inter-flowpath structure projecting axially to the structure leading edge, the inter-flowpath structure extending radially between the structure inner side and the structure outer side, the inter-flowpath structure disposed radially between and partially forming the core inlet and the bypass inlet at the structure leading edge, the structure inner side bordering the core flowpath, and the structure outer side bordering the bypass flowpath;
a first air circuit comprising a first circuit inlet fluidly coupled to the core flowpath and a first circuit outlet fluidly coupled to the bypass flowpath, the first circuit inlet disposed along the structure inner side, and the first circuit outlet disposed along the structure outer side; and
a second air circuit comprising a second circuit inlet fluidly coupled to the core flowpath and a second circuit outlet fluidly coupled to the bypass flowpath, the second circuit inlet disposed along the structure inner side, and the second circuit outlet disposed along the structure outer side;
wherein the first circuit inlet and the second circuit inlet are disposed to opposing lateral sides of a vertical bottom position of the inter-flowpath structure, and the first circuit inlet and the second circuit inlet are each circumferentially offset from the vertical bottom position of the inter-flowpath structure by twenty degrees and sixty degrees about the axis.

15. The assembly of claim 14, further comprising:
a first compressor rotor; and
a second compressor rotor rotationally independent and downstream of the first compressor rotor along the core flowpath;
the first circuit inlet and the second circuit inlet each disposed upstream of the first compressor rotor along the core flowpath; and/or
further comprising a flow regulator configured to regulate airflow through at least one of the first air circuit or the second air circuit from the core flowpath to the bypass flowpath.
